# EUROPEAN PATENT APPLICATION

(11) **EP 2 573 675 A1**
(43) Date of publication of application: **27.03.2013**
(21) Application number: 10851763.2
(22) Date of filing: 20.05.2010
(51) Int. Cl.: G06F 9/445, G06F 21/22

(54) **EXTERNAL BOOT DEVICE, EXTERNAL BOOT METHOD, INFORMATION PROCESSING DEVICE AND NETWORK COMMUNICATION SYSTEM**

(71) Applicant: Suginaka, Junko, Minato-ku, Tokyo 105-0001 (JP)
(72) Inventor: FURUKAWA, Yoshihisa, Tokyo 102-0094 (JP)
(74) Representative: Peter, Julian
(86) International application number: PCT/JP2010/058552
(87) International publication number: WO 2011/145199

(57) **Abstract**

An external boot device includes a storage unit (23 and 25) that stores a loader and an extended BIOS to read the loader, an extended BIOS reading processor (201) that reads the extended BIOS onto a RAM (12) of a terminal (1) in response to a read request from system BIOS of the terminal (1), a DMAC (24) that in a bus master scheme transfers the loader to a startup memory region (120) of the RAM (12) in the terminal (1) in response to a transfer request from the extended BIOS read onto the RAM (12) in the terminal (1), and a DMA transfer commander (202). Even if malware hides in BIOS in the terminal (1), a highly secure environment that prevents the malware from appearing in a use environment of the terminal (1) is set.

## Description

### Technical Field

The present invention relates to an external boot technique to externally boot up an information processing apparatus.

### Background Art

Recently, a variety of computer viruses and the like have entered information processing apparatuses including servers and terminals (such as personal computers) connected to a network such as the Internet, and have hidden there. As a result, data in the information processing apparatus have suffered from various damages including thefts, intercepts, tampering, leaks, and attacks. In response to such computer virus damages, steps are taken to prevent viruses from entering as much as possible. The steps include developing and improving software to detect and nullify viruses, and imposing line constraints (address constraints). However, completely preventing viruses from entering the information processing apparatus seems difficult in view of a time lag from a detection of a new type of virus to a development of software to nullify the virus. It is also likely that the information processing apparatus is infected with a virus during a startup period subsequent to power-on, and an anti-virus step even effective during the startup period is also desired.

Patent Literature 1 describes an OS (Operation System) startup method stored on a hard disk in an information processing apparatus. More in detail, when a switch-on of the information processing apparatus is detected, BIOS (Basic Input/Output System) stored on a flash memory starts up, searches for a boot device that remains bootable, starts up a boot OS stored on a USB (Universal Serial Bus) memory, and first causes display means to display a password input screen. Next, the information processing apparatus receives a password input on the password input screen by input means. Upon receiving the password, the information processing apparatus links the input password to information unique to the USB memory, converts linked input password into a hash value, and then generates a unlock password of a hard disk to be started up. If the information processing apparatus determines that the hard disk to be started up has been security set, the information processing apparatus unlocks the hard disk with the unlock password. If the information processing apparatus determines that the hard disk to be started up has not been security set, the information processing apparatus sets security of the hard disk, starts up MBR (Master Boot Record) of the hard disk in an unlocked state, and starts up a boot loader of the OS. The method of starting up the OS of Patent Literature 1 has been discussed. Security authentication at the OS startup can thus be performed. Patent Literature 1 also describes a virus check of the hard disk that can be performed with the hard disk in an unlocked state using a virus check function stored on the USB memory.

Patent Literature 2 describes an execution method of a startup program. More in detail, the execution method includes a pre-startup process step. In the pre-startup process step, a tentative startup sector storing any optional program such as of security is read prior to a startup sector of a storage medium storing the startup program, in response to a first read request from a personal computer to a hard disk, and the optional program is executed. After the execution of the optional program such as of security is performed, the originally intended startup program is performed and the OS starts up. In this way, the optional program such as of security can be executed prior to the startup of the OS without the need to modify the BOIS of the personal computer and a startup sector (LBA0) of the storage medium.

Patent Literature 3 discloses a computer including a DMA (direct memory access) controller, and a boot technique to boot up a second OS file. The computer here includes the DMA (direct memory access) controller that transfers data between a peripheral device (such as FDD) and a main memory using PCI (Peripheral Component Interconnect) without CPU intervention.

### Citation List

### Patent Literature

[Patent Literature 1] Japanese Unexamined Patent
   Application Publication No. 2007-66123
[Patent Literature 2] Japanese Unexamined Patent
   Application Publication No. 2006-236193
[Patent Literature 3] Japanese Unexamined Patent
   Application Publication No. 2001-100983

### Summary of Invention

### Technical Problem

The technique described in Patent Literature 1 is a personal authentication technique that links the password to the unique information of the USB memory to generate the hash value as the unlock information out of fear that the password could be thieved in the course of entering the password on the password input screen. Patent Literature 1 also describes the virus check of the hard disk that can be made using the virus check function stored on the USB memory, but fails to give any specific description of the virus check.

According to Patent Literature 2, if the optional program in the tentative startup sector on the hard disk is a virus check program, an unauthorized program having the form of Rootkit, for example, can be started up before the optional program is executed, and can hide itself (unauthorized program) from the optional program. The technique described in Patent Literature 2 is thus subject to a limitation in the reliability of the virus check. Patent Literature 2 describes no specific method at all to monitor a virus before OS startup. Even if it is assumed that a virus hiding from before the power-on can be detected, no virus check is performed after re-start (OS startup), and the computer remains vulnerable to an virus entering at the restart. Patent Literature 1 and 2 provides typical methods that are to be performed on the personal computer side. The techniques described in Patent Literature 1 and 2 are thus subject to a limitation from this point of view.

A so-called USB memory boot method such as the startup method described in Patent Literature 1 is known these days. The USB memory boot method is a technique in which BIOS specifies a USB memory with higher priority if a terminal is powered on with the USB memory connected to the terminal, an OS stored on the USB memory boots up, and a terminal in a working place, for example, can thus be used under an originally intended user's own PC environment. In another known application of the USB memory boot method, an anti-virus program is stored and then started up with higher priority so that a virus hiding in the terminal is nullified. However, there is no mention about the presence or absence a virus infection with the USB memory itself, and the presence or absence of a virus intrusion in a period from the end of a virus nullification process to the startup of the OS.

Patent Literature 3 describes only a DMA controller of PCI, and describes nothing about the use of the DMA controller in the loading of an extended BIOS and a second OS file from the standpoint of security.

It is an object of the present invention to provide a high-security technique that, if malware hides in BIOS, prevents the malware from appearing in a use environment of an information processing apparatus.

It is also another object of the present invention to provide a high-security technique that, if an information processing apparatus is set in a protect mode by malware, reliably sets the information processing apparatus back to a real mode and thus prevents the malware from appearing in the use environment of the information processing apparatus.

### Solution to Problem

An external boot device of the present invention to boot up an information processing apparatus includes storage means that stores a loader and an extended BIOS to read the loader, extended BIOS reading means that reads the extended BIOS onto the information processing apparatus in response to a read request from BIOS of the information processing apparatus, and transfer means that in a bus master scheme transfers the loader to a startup memory region on a RAM of the information processing apparatus in response to a transfer request from the extended BIOS read onto the information processing apparatus.

An information processing apparatus of the present invention includes a connection port that is communicable with the external boot device. The information processing apparatus is externally booted by the external boot device.

A network communication system of the present invention includes the external boot device, and an information processing apparatus that has a connection port communicable with the external boot device, and is externally booted by the external boot device.

An external boot method of the present invention to boot up an information processing apparatus includes storing on storage means a loader and an extended BIOS to read the loader, reading with extended BIOS reading means the extended BIOS onto the information processing apparatus in response to a read request from BIOS of the information processing apparatus, and transferring with transfer means in the bus master scheme the loader to a startup memory region on a RAM of the information processing apparatus in response to a transfer request from the extended BIOS read onto the information processing apparatus.

According to the present invention, if the information processing apparatus such as a personal computer (PC) is powered on with an external device, such as a PCI (Peripheral Component Interconnect) modified for the present invention, installed thereon, a CPU or the like boots up (starts up) the information processing apparatus to be in an operative state. The extended BIOS reading means reads the extended BIOS stored on the storage means onto the information processing apparatus in response to the read request from the BIOS (system BIOS) of the information processing apparatus. Next, if control of the CPU of the information processing apparatus is handed over from the system BIOS to the extended BIOS, the transfer means in the bus master scheme transfers the loader to the startup memory region of the RAM in the information processing apparatus in response to the transfer request from the extended BIOS. In this way, the loader overwrites the startup memory region of the RAM. Even if malware resides or hides in the BIOS of the information processing apparatus and replicates itself or is copied on the startup memory region of the RAM during a system BIOS operation, the above-described overwriting process sets a high-security environment that prevents the malware from appearing in the use environment of the information processing apparatus.

Also, the external boot device of the present invention monitors the presence or absence of a fault in the booting using the monitoring means. If the monitoring means detects a fault in the booting, the update means rewrites the RAM with the contents in the real mode. In this way, even if the information processing apparatus is set in the protect mode by the malware, the information processing apparatus is reliably set back to the real mode. This arrangement sets a high-security environment that prevents the malware from appearing in the use environment of the information processing apparatus.

### Advantageous Effects of Invention

According to the present invention, even if malware resides or hides in the BIOS of the information processing apparatus, a high-security environment that prevents the malware from appearing in the use environment of the information processing apparatus is set and provided.

Also, even if malware happens to set the information processing apparatus in the protect mode, the information processing apparatus is reliably set back to the real mode. A high-security environment that prevents the malware from appearing in the use environment of the information processing apparatus is set and provided.

### Brief Description of Drawings

FIG. 1 is a diagrammatic view illustrating an embodiment of a network communication system to which an external boot device of the present invention is applied.
FIG. 2 is a block diagram illustrating an example of a hardware configuration of the external boot device of FIG. 1.
FIG. 3 is a block diagram illustrating an example of functional blocks related to the booting of a terminal and the external boot device.
FIG. 4 is a memory map of a RAM of the terminal in a real mode.
FIG. 5 is a memory map of the RAM of the terminal in a protect mode.
FIG. 6 is a flowchart illustrating the procedure of a startup process of a system BIOS executed by a CPU of the terminal.
FIG. 7 is a flowchart illustrating the procedure of a POST process (step S3) of a system BIOS executed by the CPU in the terminal.
FIG. 8 is a flowchart illustrating the procedure of a monitoring process I executed by the CPU in the external boot device.
FIG. 9 is a flowchart illustrating the procedure of a monitoring process II executed by the CPU in the external boot device.
FIG. 10 is a flowchart illustrating the procedure of an extended BIOS process executed by the CPU in the terminal.
FIG. 11 illustrates the procedure of a monitoring process III executed by the CPU and the extended BIOS in the external boot device.
FIG. 12 is a flowchart illustrating part of the procedure of the monitoring process III executed by the CPU in the terminal.
FIG. 13 is a flowchart illustrating part of the procedure of the monitoring process III executed by the CPU on the external boot device side.

### Description of Embodiments

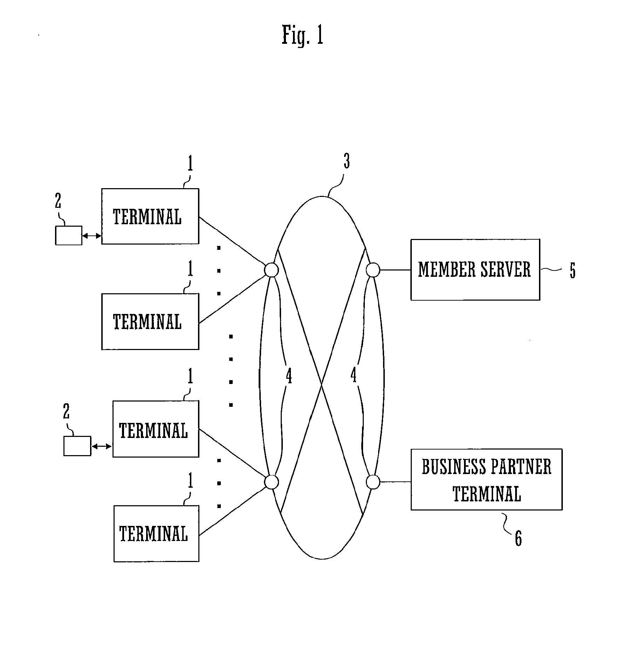

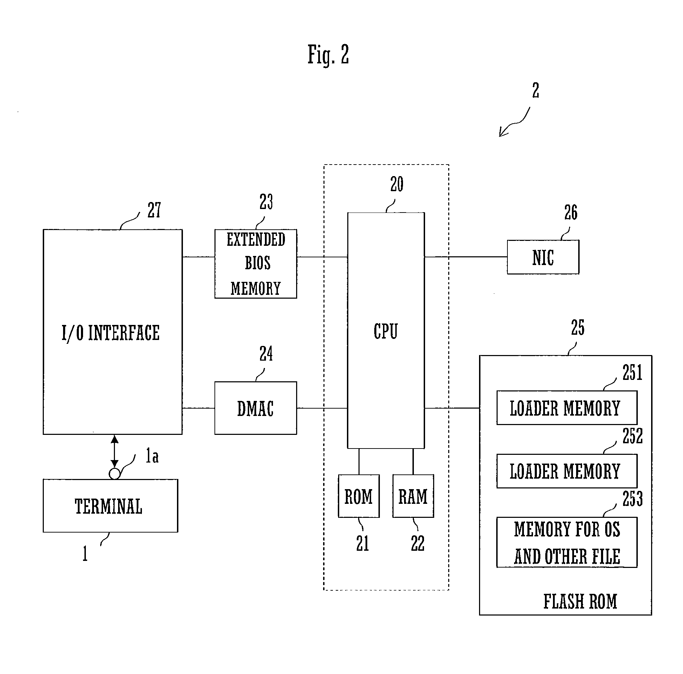

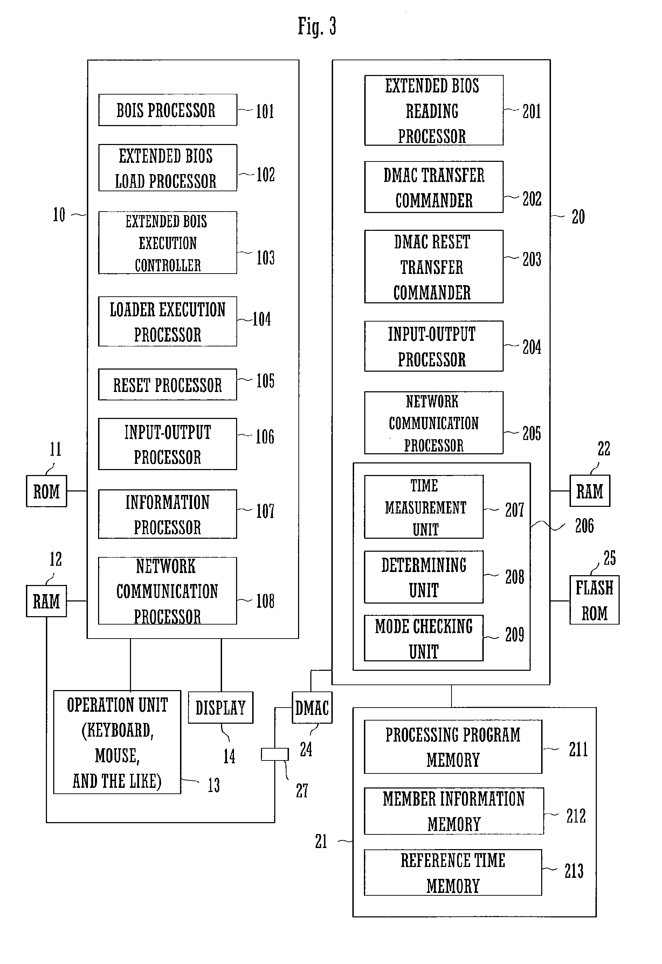

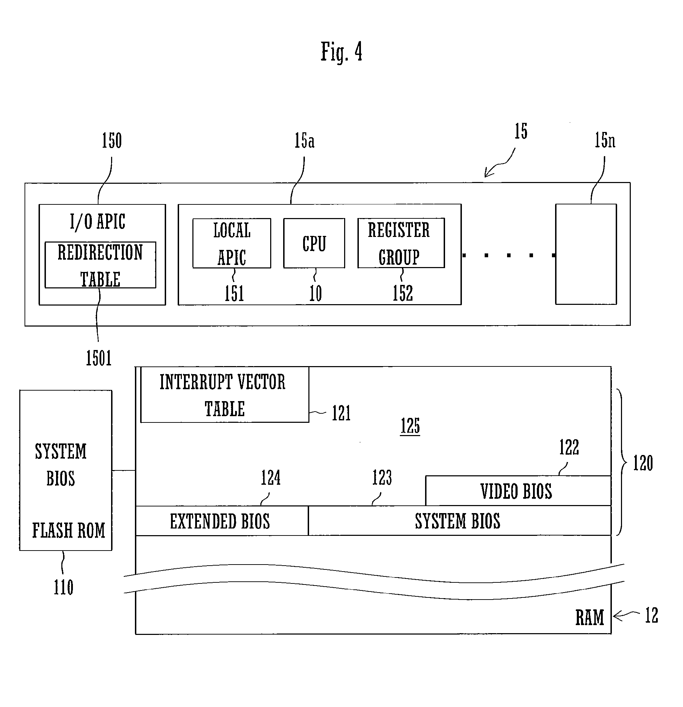

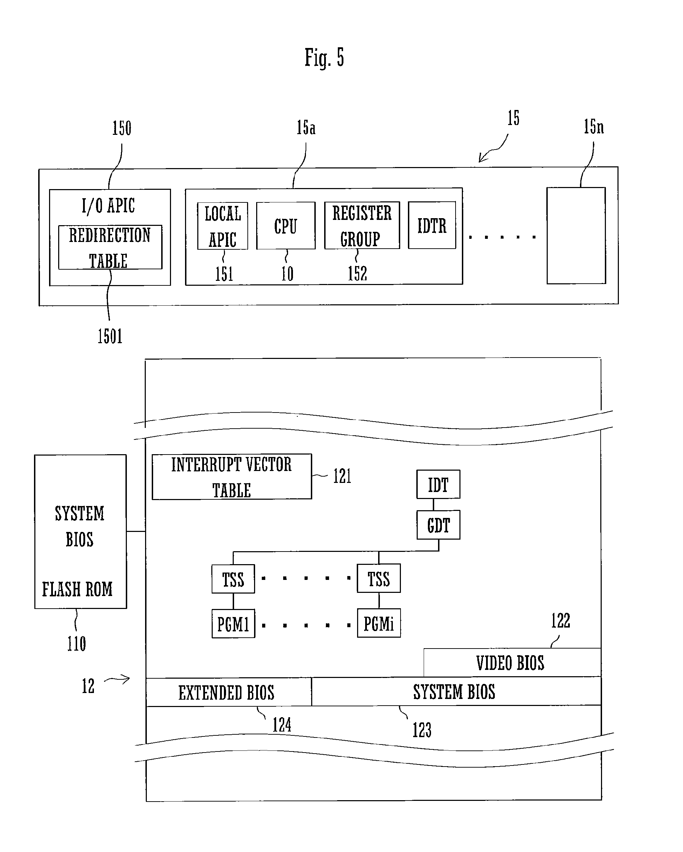

FIG. 1 is a diagrammatic view illustrating an embodiment of a network communication system to which an external boot device of the present invention is applied. FIG. 2 is a block diagram illustrating an example of a hardware configuration of the external boot device of FIG. 1. FIG. 3 is a block diagram illustrating an example of functional blocks related to the booting of a terminal and the external boot device. FIG. 4 is a memory map of a RAM of the terminal in a real mode. FIG. 5 is a memory map of the RAM of the terminal in a protect mode.

The network communication system of FIG. 1 includes terminals 1, each serving as an example of an information processing apparatus including a personal computer, for example, external boot devices 2 of PCI (Peripheral Component Interconnect) type, each connectable to the terminal 1, and a network 3 such as the Internet. The terminal 1 is connected to the network 3 via a provider (ISP) 4. The PCI serving as one example of the external boot device 2 includes a cassette type casing of a predetermined size, an I/O port on the casing to connect to the terminal 1, and includes inside the casing as described below, a CPU, a memory to store an extended BIOS, and a NIC (Network Interface Card) that enables communication with the network 3. According to the embodiment, the terminal 1 is directly connected to the network 3, but if the external boot device 2 is mounted on the terminal 1, the terminal 1 is connected to the network 3 via the external boot device 2 as described below. A plurality of ISPs 4 are arranged on the network 3, and each ISP 4 is connected to one or a plurality of terminals 1 and an unillustrated Web site that provides a variety of information. Each person is supplied with the external boot device 2 if and when they are registered as a member authorized to receive a predetermined service via an operation on the terminal 1, for example. The external boot device 2 records information identifying each member and other information on an internal memory.

The terminal 1 includes a computer and thus a CPU (Central Processing unit) 10 as control means as illustrated in FIGS. 3, 4, and 5. The CPU 10 is connected to a ROM (Read Only Memory) 11, and a RAM (Random Access Memory) 12. The ROM 11 may include a flash ROM that permits data to be rewritten. According the embodiment, the ROM 11 may include the flash ROM, a CMOS (Complementary Metal Oxide Semiconductor), and the like, and a BIOS (Basic Input/Output System) is written on the flash ROM 110 (see FIGS. 4 and 5). According to the embodiment, the external boot device 2 also has a BIOS as described later. To discriminate the two BIOS's, the BIOS of the terminal 1 is hereinafter referred to as a system BIOS, and the BIOS of the external boot device 2 is hereinafter referred to as an extended BIOS.

As illustrated in FIG. 3, the CPU 10 is connected to an operation unit 13 and a display 14 to display an image. The operation unit 13 includes a keyboard having numeric keys, a mouse, and the like, to input a command and information needed by an operator. The display 14 is used to display a screen to verify input information and a screen for communication contents. It is noted that the system BIOS is so set that the external boot device 2 is specified with higher priority as a device having the extended BIOS. The RAM 12 has a predetermined memory capacity, for example, a memory capacity of 4 Gbytes in a 32 bit version. About 1 Mbytes of the RAM 12 having a memory capacity of 4 Gbytes in a 16 bit version serve as a startup memory region 120 which is a work area in a real mode at startup. A region of 4 Gbytes serves as a work area when a standard process is performed after startup, or serves a work area in the protect mode (including an emulator generated by malware). Another memory may include a hard disk (HDD) or the like which stores necessary program and data. The hard disk (HDD) serves as a memory area that stores an OS read from the external boot device 2, and a particular AP executable by the OS each time the AP is read and used.

The terminal 1 includes a chipset 15 as illustrated in FIGS. 4 and 5. The chipset 15 controls exchange of data between main components, connected to and forming an unillustrated mother board and including a CPU, a variety of memories, a hard disk (HDD), an unillustrated CD-ROM, and the like. The chipset 15 is described in detail below.

The network 3 is connected via the ISP 4 to one or a plurality of member servers 5, and a plurality of business partner terminals 6. The member server 5 stores appropriate information relating to a member who owns the terminal 1 or is eligible to control the terminal 1. For example, the member server 5 stores, on a per member basis, membership information, such as name, alias, e-mail address, and residential address of each member. The business partner terminal 6 performs a process responsive to a transaction request from each terminal 1, for example, a process for electronic settlement, and stores transaction information and performs information management. The member server 5 may store, in addition to the membership information, information that is supplied to the terminal 1 as necessary, and processing software needed to perform a service to be provided to the member. The processing software is a document creation program to create a necessary document, for example. Furthermore, the member server 5, if it has a high memory capacity, may additionally store (retain and manage) transaction contents and log information for each terminal 1.

The network communication system may be implemented in the following configuration. The terminal 1 may be an exclusive terminal that can be connected to an exclusive network only, or may be a general-purpose terminal that can be connected to another network switched from the Internet. The terminal 1, if it is a general-purpose terminal, stores a program file (referred to as a general AP (application program)). The general AP creates, processes, and stores information using a typical software program for producing a document and drawings, and performs a typical process, such as transmitting and receiving information using a communication software program. The external boot device 2 stores a program file (referred to as a particular AP) which performs a process related to execution of a particular application software program. The general AP is enabled to be operative by an OS read by a loader originally residing in the terminal 1, and the particular AP is enabled to be operative by an OS read by a loader in the external boot device 2 (or a loader started up by a restart program). More specifically, after booting, the external boot device 2 loads, on the terminal 1 of each of a consumer, a store, and a company, as members, a software program that produces and communicates documents related to buying or selling of products and services, asking for cost estimate of and billing charge for products and services, and payment and money received (documents related to so-called business dealing). The external boot device 2 also loads on the terminal 1 a predetermined software program for an authentication process as necessary. More specifically, using the particular AP, the terminal 1 settles typical business transactions, for example, issues a bill from a store, receives a bill from a store, issues an instruction sheet to transfer money from a buyer to an account of an banking institution of a bill issuer (i.e., payment), issues a receipt of the money, and performs a transmission and reception process in a variety of digital documents of a business transaction regardless of whether the business transaction is performed in electronic settlement. The particular AP can produce a variety of documents in an electronic file in text format or binary format. The electronic files may be transmitted or received among the terminals 1 via the member server 5 (or among the terminals 1 and the member server 5 in parallel with the terminals 1), for example. Installed on the terminal 1 of each banking institution is a particular application software program that performs a settlement instruction process (an instruction to perform a settlement process between the banking institutions and the like) in accordance with a banking settlement document from the terminal 1 of the consumer or the company. Each registered member is supplied with a respective external boot device 2 having unique information written thereon. Each member can enjoy service on condition that the member has successfully completed at least an authentication process of authenticity of the external boot device 2 with the external boot device 2 inserted in a port 1a of the terminal 1, and more preferably, the member has also successfully completed a personal authentication process (authentication as an authorized user of the external boot device 2).

The member server 5 includes a storage unit that stores, for management purpose, file transmission and reception log of each member, and file, and the like of each member. The member server 5 may have an authentication function. In such a case, the authentication function may view a file, i.e., a packet transmitted and received between the member server 5 and the terminal 1, thereby verifying authenticity of each member.

The network communication system finds a variety of other applications. For example, the network communication system applies to an information communication and management system which includes public or semi-public organizations (including a private organization) (such as national and municipal bodies, associates, and unions), which create, store, and manage secret information, and the terminal 1 outside the organization. Contemplated as information communications with a terminal outside the organization are issuing a variety of certificates including a certificate of residence, and transmission of application forms.

If a document file is transmitted or received in a packet formed in accordance with TCP/IP (transmission control protocol/ internet protocol) standards, a received packet may be converted back into an original file or a file to be transmitted may be converted before being transmitted. Furthermore, a header of each packet to be transmitted includes a global IP address of the terminal 1 as a transmission source, and global IP addresses of another terminal as a transmission destination and the member server.

An unillustrated router is mounted on NIC 26 of FIG. 2, or the router is serially connected to the NIC 26. The router sets address information (a routing table or an arp (Address Resolution Protocol) table). The address information determines whether address information indicating a transmission destination attached to a predetermined location of each packet as a transmission signal or a reception signal is a global IP address complying with standards of the Internet or a predetermined local IP address (MAC address), supporting Ethernet (registered trademark) or the like, for an exclusive network different from the global IP address in terms of attachment method (in a form discriminated from the global IP address). The packet is checked against the table, and is transmitted to only a route having an address matching the address of the packet. In this way, a transmission line is switched in a software fashion between via the Internet or via the exclusive network.

As illustrated in FIG. 2, the external boot device 2 includes a mother board (not illustrated) in the casing thereof, and a variety of circuit elements and semiconductors are mounted on the mother board. The external boot device 2 includes a CPU 20 as control means. The CPU 20 is connected to a ROM 21 and a RAM 22. The CPU 20 is also connected to an extended BIOS memory 23, such as ROM storing the extended BIOS, and DMAC (Direct Memory Access controller) 24, mounted on the mother board. The CPU 20 is also connected to flash ROM 25 and NIC 26, mounted on the mother board. An I/O interface 27 is mounted at an input-output portion of the external boot device 2 and designed to be detachably mounted to the port 1a of the terminal 1. With the I/O interface 27 mounted, communication and power supplying are performed via lines of a predetermined number.

The ROM 21 includes a processing program memory 211, a member information memory 212, and a reference time memory 213. The processing program memory 211 stores a variety of processing programs that the external boot device 2 and an external device are to execute. The member information memory 212 stores at least information identifying each member. The reference time memory 213 stores reference time information used to monitor the presence or absence of malware to be discussed below. The RAM 22 temporarily stores interim data in the middle of a process, and transfer data.

At the startup of the terminal 1 and during an operation of the terminal 1, the CPU 20 reads a processing program from the ROM 21 and then executes the processing program. The CPU 20, when powered on, starts up the system BIOS, performs a necessary self-diagnosis process, and then prior to booting, performs a POST (Power on Self Test) process to initialize usable peripheral devices. In the POST process, the CPU 20 searches for any device that stores the so-called extended BIOS, from among connected external devices. If an external device having the extended BIOS is found, the CPU 20 retrieves the extended BIOS of the external device.

The extended BIOS is a program that is read onto the terminal 1, that starts up after control is handed over to the terminal 1, and that exchanges predetermined information with the external boot device 2. As described below, the extended BIOS sets the terminal 1 in a process space responsive to the extended BIOS, i.e., in an environment that allows communication via the previously described exclusive network only, with another terminal 1, member servers 5, and the like. Also, the extended BIOS generates information to be transmitted or received via the exclusive network.

The DMAC 24 refers to a controller (circuit) of a bus-mater type that, without being controlled by the CPU 10, transmits or receives information by managing control of a bus between the terminal 1 and the external boot device 2. Here, a request from the CPU 10, and an operational status of the CPU 20 in the external boot device 2 are monitored, and the DMAC 24 performs the DMA transfer between the two devices in response to the monitoring results.

The flash ROM 25 stores a variety of information to be read onto the terminal 1. A loader memory 251 stores a loader (R). The loader (R) is a program that is transferred by the DMAC 24 and then read onto the RAM 12 when the RAM 12 is in a real mode as described below. A loader memory 252 stores a loader (P). The loader (P) is a program that is transferred by the DMAC 24 and then read onto the RAM 12 when the RAM 12 is shifted back into the real mode from a protect mode as described below. IDTR (Interrupt Descriptor Table Register) corresponding to an interrupt vector table is in the protect mode when the loader (P) is read. If the loader (P) is expanded without shifting the RAM 12 back into the real mode, the interrupt vector table in the real mode may not be used. For this reason, the extended BIOS performs a real-mode return process beforehand to rewrite IDTR with an interrupt vector table for the real mode.

The loader (R) has an amount of information of about 1 Mbytes, and is expanded onto a startup memory region 120. The loader (P) has an amount of information of 4 Gbytes, and is expanded onto the entire RAM 12 in an overwrite fashion. The loaders (R) and (P) commonly share a program content in a loader instruction area, and contents of the other information area include information used to overwrite (reset) the startup memory region 120, and the RAM 12, for example, the contents of the other information area are data "0" or the like. The loader (R) may share the information contents with the loader (R). A memory 253 for OS and other file stores, as programs, OS and the like (including a driver, and the particular AP) that are to be read onto the RAM 12 by the loaders (R) and (P).

The loader (P) may operate in the following method. The loader (P) is provided with a file having a size of 1 Mbytes and logic in the loader (P) to cut away an area above 1 Mbytes of the RAM 12. When the loader (P) is executed, the CPU 10 in the terminal 1 performs a reading process of 1 Mbytes and a cutaway process. In this method, an increase in performance is expected more than with a 4 Gbyte transfer operation.

The NIC 26 performs an information process to communicate with another terminal 1 or the like via the network 3, and includes a ROM (not illustrated) storing a predetermined processing program for the information process, and a RAM (not illustrated) temporarily storing a process content. As previously discussed, the NIC 26 managing connection with the network 3 is connected to a public communication line down to the ISP 4 via an unillustrated router, and controls communication with the network and the network 3.

The I/O interface 27 includes lines through which information is transmitted to and received from the external boot device 2 via the port 1a, and lines for power supplying. The terminal 1 includes an unillustrated power supply circuit. When the external boot device 2 is mounted on the terminal 1, a charging circuit supplies current to an unillustrated charging circuit in the external boot device 2 via the port 1a and the I/O interface 27 of the external boot device 2. The external boot device 2 is thus powered on.

As illustrated in FIG. 3, by executing a processing program stored on the ROM 11 and the RAM 12, the CPU 10 in the terminal 1 functions as BIOS processor 101, extended BIOS load processor 102, extended BIOS execution controller 103, loader execution processor 104, reset processor 105, input-output processor 106, information processor 107, and network communication processor 108. The BIOS processor 101 starts BIOS. The extended BIOS load processor 102 reads the extended BIOS from the external boot device. The extended BIOS execution controller 103 executes the extended BIOS. The loader execution processor 104 executes the loader. The reset processor 105 receives monitoring results from the external boot device, and performs a reset process if necessary. The input-output processor 106 controls transmission and reception of information with the external boot device 2. The information processor 107 performs document creation and a variety of other processes using a particular AP subsequent to startup by external boot, or using a general AP subsequent to startup by standard boot. The network communication processor 108 transmits information to and receives information from another terminal 1, the member server 5, and the business partner terminal 6 via the NIC 26 and the network 3.

When the terminal 1 is powered on, the BIOS processor 101 performs a self-diagnosis process, and then checks the statuses of the memories and peripheral devices through the POST process. Through the routine of the POST process, the BIOS processor 101 is so set that a device having BIOS, such as the external boot device 2 having the extended BIOS in the embodiment, is started up with higher priority.

The extended BIOS load processor 102 reads the extended BIOS onto a predetermined area in the startup memory region 120 of the RAM 12. If the external boot device 2 is not mounted, the BIOS processor 101 reads programs in the order of priority, for example MBR (master boot record) as in a normal operation, and control is handed over to the read master boot program.

The extended BIOS execution controller 103 executes the extended BIOS after the extended BIOS is read onto the startup memory region 120 of the RAM 12, and the system BIOS hands control over to the extended BIOS. The extended BIOS reads a variety of instruction codes onto the startup memory region 120 of the RAM 12 from the external boot device 2 and hands control over to each instruction. The instruction code includes a plurality of settings here. More specifically, in response to a given instruction code, an initialization process of a necessary device is performed to prepare in the terminal 1 an environment where the particular AP is executable. The necessary device may include the display 14, and a keyboard and mouse forming the operation unit 13. In response to another given instruction code, IRQ and an interrupt vector (INT) of the external boot device 2 are registered on a redirection table 1501 of an I/O APIC 150. The number of the IRQ at registration is also referred to as an interrupt number. The I/O APIC 150 is an interrupt controller that supports multi-processors and sets a priority order of hardware interrupts in the redirection table 1501 that is used to notify the CPU 10 of a received interrupt. The IRQ here is an interrupt request, and the interrupt number is order information indicating the priority order of hardware interrupts if the hardware interrupts occur at the same time.

A given instruction code may be used to cause the external boot device 2 to transmit a data transfer request signal to receive data transfer using the DMAC 24. Data that the data transfer request signal requests to transfer include a loader of about 1 Mbytes and the like (including an interrupt vector table). A DMA bus master transfer scheme is adopted as a loader process to be performed by the extended BIOS so that at least the intervention of the CPU 10 is precluded. Even if the CPU 10 is occupied by malware during the transfer, data transfer itself may be performed in a normal manner. The loader (R) is forced to delete immediately preceding data on the startup memory region 120 of the RAM 12 (in a manner free from the control of the CPU 10), i.e., the loader (R) overwrites the startup memory region 120 of the RAM 12. In this way, even if a virus and the like are copied in the startup memory region 120 by malware, these are reliably removed. As necessary, an instruction code may used to set D_LCK bit of SMRAM control register in order to write-protect SMRAM (access inhibit). Locking for access inhibit in this way prevents the privileged mode called SMM (system management mode) from being used in an unauthorized manner. SMM is the top-most authority with which all memories are freely accessed.

The loader execution processor 104 performs a loader process if control of the CPU 10 is handed over from the extended BIOS to the loader. Through the loader process, the OS and the like in the memory 253 for OS and other file in the external boot device 2 are read onto the RAM 12 in the terminal 1.

The loader execution processor 104 starts up kernel such as the OS after performing a preparation operation for the startup of the OS and the like. The OS and the like thus start up, and the loader having control handed thereto reads the particular AP onto the RAM 12. Furthermore, a communication control program in the read particular AP sets on the router (not illustrated) a route setting that permits communication between the terminals 1 of the members. This state is preferably maintained while the external boot device 2 continues to be mounted on the terminal 1. The particular AP loaded on the terminal 1 or the CPU 20 in the external boot device 2 may periodically check whether the external boot device 2 is mounted on the terminal 1. Alternatively, the mounting of the external boot device 2 is presumed to continue until the terminal 1 detects a signal that indicates the external boot device 2 has been pulled out after startup.

If the status of the protect mode is detected in the startup phase from the system BIOS, a startup process may be suspended on the assumption that the presence of malware is likely. Contemplated as a remedial step in such a case is rewriting the system BIOS, or nullifying the virus hiding in the system BIOS with a vaccine. In this way, the risk of processing information under a virus infected environment is avoided. However, if the startup process is suspended, the user may be inconvenienced, and some problems still remain. For example, the terminal 1 as a whole may not be started up during a remedial phase, and each member is not provided with a use environment of the particular AP. To cope with this, if a fault occurs because of the protect mode, a reset process is executed to revert to a real mode.

The reset processor 105 is implemented by an instruction command for setting the real mode that is transmitted from the external boot device 2 as described below after control is handed over to the extended BIOS. The instruction command for setting the real mode is issued if the terminal 1 is set to be in the protect mode during the startup process of the system BIOS, or if it is doubtful during the startup process of the system BIOS that the terminal 1 is in the real mode. Receiving the instruction command for setting the real mode, the reset processor 105 performs part of the process to reset the mode to the real mode. According to the embodiment, the reset processor 105 performs a process of resetting the IDTR to a real-mode interrupt vector, a process of registering the IRQ and the interrupt number of the external boot device 2 in the redirection table 1501 of the I/O APIC 150, and an output process of the data transfer request signal. The mode determination process is performed on the external boot device 2 as described below so that the effect of malware is precluded.

The input-output processor 106 transmits information to and receives information from the external boot device 2.

As illustrated in FIG. 3, by executing a program stored on the ROM 21, the CPU 20 functions as extended BIOS reading processor 201, DMA transfer commander 202, DMA reset transfer commander 203, input-output processor 204, and network communication processor 205. The extended BIOS reading processor 201 reads the extended BIOS onto the terminal 1. The DMA transfer commander 202 requests predetermined data to be transferred between the terminal 1 and the external boot device 2 using the DMAC 24. The DMA reset transfer commander 203 requests the loader and the like to be transferred from the external boot device 2 to the terminal 1 using the DMAC 24. The input-output processor 204 processes transmission and reception of information with the terminal 1. The network communication processor 205 transmits or receives a file and the like created using the particular AP subsequent to the startup through the external boot to or from another terminal 1, the member server 5 and the business partner terminal 6 via the NIC 26 and the network 3.

The CPU 20 also functions as a monitoring unit 206 by executing the program stored on the ROM 21. The monitoring unit 206 includes time measurement unit 207, determining unit 208 that determines the statue of the mode, and mode checking unit 209.

The extended BIOS reading processor 201 receives a read instruction in the POST process of the terminal 1, and then performs a reading process to the RAM 12.

The DMA Code transfer commander 202 starts up (issues a transfer command to) the DMAC 24 to transfer the loader (R) in the state of the real mode. The DMA reset transfer commander 203 starts up (places (issues) a transfer request to) the DMAC 24 to transfer the loader (P) to the RAM 12 in the state of the protect mode.

The time measurement unit 207 starts measuring time when the external boot device 2 powered from the terminal 1 reaches a startup level thereof and stops measuring time when an instruction code is transmitted to the external boot device 2 with control handed from the system BIOS of the terminal 1 to the extended BIOS. The time measurement unit 207 thus measures time elapsed between the start of time measurement and the stop of time measurement.

The determining unit 208 compares the time measured by the time measurement unit 207 with reference time information stored on the reference time memory 213 in the ROM 21 in terms of magnitude (length). If the measured time is longer than the reference time, the determining unit 208 determines that malware sets the terminal 1 to be in the protect mode, and transmits to the terminal 1 an instruction code to revert to the real mode (to rewrite the mode). The reference time is set as below. First, time taken to complete all the following operations including the power-on of the terminal 1, the POST process that is performed after the startup of the system BIOS, the expansion of the extended BIOS on the RAM 12, and the handover of control to the extended BIOS may be approximately equal to set time in normal state with no malware operative.

On the other hand, if malware hides in the system BIOS, or if malware intrudes during the startup of the system BIOS and constructs a protect mode environment on the RAM 12, longer time may be taken than the set time in the normal state. Depending on the time elapse from the startup of the terminal 1, i.e., the startup of the external boot device 2 to the handover of control to the extended BIOS, the external boot device 2 determines whether the RAM 12 is in the real mode space or the protect mode space, instead of a determination method in which the terminal 1 directly determines the mode.

FIG. 4 illustrates the contents of the RAM 12 in the real mode, and FIG. 5 illustrates the contents of the RAM 12 in the protect mode. As illustrated in FIG. 4, in an example including a plurality of CPUs 10, the chipset 15 includes, in addition to the I/O APIC 150, chipsets 15a through 15n. Each chipset includes a CPU 10, a local APIC 151, and a register group 152 including a variety of registers such as EFLAGS and a universal register. The startup memory region 120 of 1 Mbytes of the RAM 12 includes interrupt vector table expansion region 121, video BIOS expansion region 122, system BIOS expansion region 123, and extended BIOS expansion region 124, and the remaining region of the RAM 12 serves as a loader expansion region 125 where the loader read from the external boot device 2 is expanded.

In the protect mode on the other hand, the register group 152 in each of the chipsets 15a-15n has IDTR (Interrupt Descriptor Table Register) storing an address of an interrupt descriptor table (IDT) and referenced by the CPU 10 as illustrated in FIG. 5. Any optional region of 4 Gbytes of the RAM 12 includes the interrupt vector table expansion region 121, the video BIOS expansion region 122, the system BIOS expansion region 123, and the extended BIOS expansion region 124. Set in the optional region to set the protect mode are IDT (Interrupt Descriptor Table), GDT (Global Descriptor Table), PGMs (Programs) 1 - i, and management tables (excluding PGMs) of TSSs (Task State Segment) of the PGMs 1 - i. More specifically, FIG. 5 illustrates results of environment setting created on the RAM 12 by malware to make the RAM 12 look as if the space identical to that of FIG. 4 is present.

In order to expand the environment of the protect mode on the RAM 12 during the operation of the system BIOS, the malware creates each program of FIG. 5, expands the program in an appropriate area on the RAM 12, and then hands control over to the extended BIOS. The malware also needs to expand the main program thereof in the RAM 12, and these pieces of data need to be retrieved mainly from a hard disk (HDD) serving as an external medium. Time elapse from the startup of the terminal 1 to the handover of control to the extended BIOS becomes unavoidably substantially longer than the case of FIG. 4.
An appropriate period of time falling between the time elapse in the real mode of FIG. 4 and the time elapse in the protect mode of FIG. 5 is set as reference time.

Referring back to FIG. 3, the mode checking unit 209 is described below. The mode checking unit 209 is an example of a unit that performs a monitoring process different in method from the monitoring process performed by the time measurement unit 207 and the determining unit 208. After the system BIOS hands control over to the extended BIOS, the external boot device 2 issues an instruction code. The DMAC 24 is started up in response to the instruction code, reads the contents of the RAM 12 only via transfer without the control of the CPU 10, and transfers the contents of the RAM to the external boot device 2. The mode checking unit 209 checks the read contents of the RAM 12, and determines whether the contents are in the protect mode environment or not. The determination operation may be performed by referring to a criterion as to the presence or absence of information unique to the protect mode in the data of the RAM 12, for example, the presence or absence of a management table such as the GDT, IDT, TSS, or the like. In this way, whether the contents of the RAM 12 are in the protect mode environment is determined by the external boot device 2 rather than by the terminal 1.

Upon determining that malware sets the mode to be in the protect mode, the mode checking unit 209 transmits to the terminal 1 an instruction code to revert to the real mode.

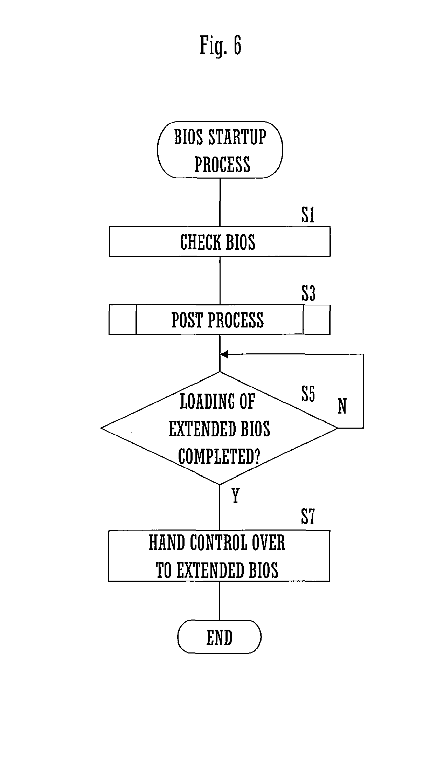

Next, a boot process of the CPU 10 and the CPU 20 is described below with reference to FIGS. 6-10. FIG. 6 is a flowchart illustrating a startup process of the system BIOS executed by the CPU 10 of the terminal 1. The CPU 10 checks the system BIOS subsequent to the power-on of the terminal 1 (step S1). Next, the CPU 10 performs the POST process (step S3). The CPU 10 determines whether the extended BIOS has been read from the external boot device 2 in the POST process (step S5). If the reading of the extended BIOS has not been completed, the CPU 10 continues reading the extended BIOS, and if the reading of the extended BIOS has been completed, control is handed over to the extended BIOS (step S7).

In the discussion that follows, it is assumed that PCI is mounted as an example of the external boot device 2 to the port 1a of the terminal 1. More specifically, if the external boot device 2 as the PCI is mounted on the port 1a of the terminal 1, the extended BIOS is read onto the RAM 12 in a startup routine of the system BIOS in the POST process.

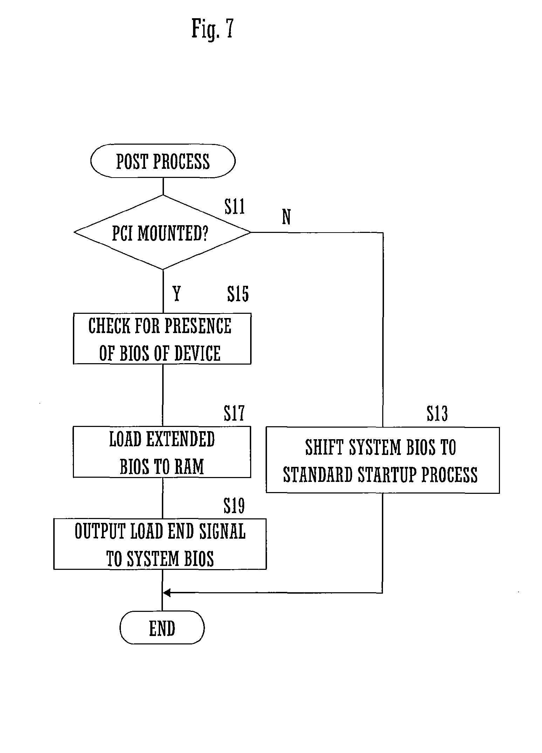

FIG. 7 is a flowchart illustrating a procedure of the POST process (step S3) of the system BIOS executed by the CPU 10 in the terminal 1. First, the CPU 10 determines whether the PCI as a device connected to the terminal 1 is mounted (step S11). If the PCI is not mounted, the system BIOS performs a standard startup process (step S13). If the PCI is mounted, the CPU 10 searches for the BIOS of the device, i.e., the extended BIOS (step S15), and then loads the extended BIOS to the RAM 12 (step S17). Next, if loading is complete, the system BIOS outputs a load end signal (step S19).

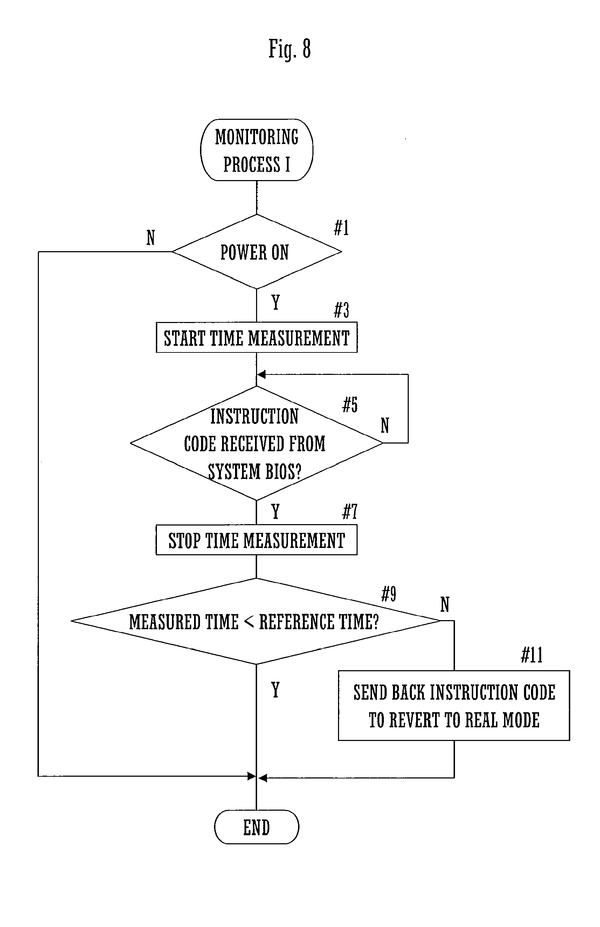

FIG. 8 is a flowchart illustrating a procedure of a monitoring process I executed by the CPU 20 in the external boot device 2. First, the CPU 20 determines whether the external boot device 2 is powered on. If the external boot device 2 is powered on (step #1), the time measurement unit 207 starts time measurement (step #3). Next, the CPU 20 waits on standby until an instruction code has been received from the system BIOS (No from step #5), and if the instruction code has been received, the time measurement unit 207 stops the time measurement (step #7).

Next, the CPU 20 determines whether the measured time is shorter than the reference time (measured time < reference time) (compares the measured time with the reference time) (step #9). If the measured time is shorter than the reference time, the CPU 20 determines that the terminal 1 is not set in the protect mode, more specifically, determines that at least malware has not set the CPU 10 in the terminal 1 in the protect mode, and exits the flow of the process. On the other hand, if the measured time is equal to or longer than the reference time, the CPU 20 determines that the CPU 10 in the terminal 1 may possibly be set in the protect mode environment, more specifically, determines that at least malware may possibly set the environment of the CPU 10 in the terminal 1 to be in the protect mode. The CPU 20 then sends back an instruction to reset the CPU 10 in the terminal 1 to the real mode (step #11), and then exits the flow of the process.

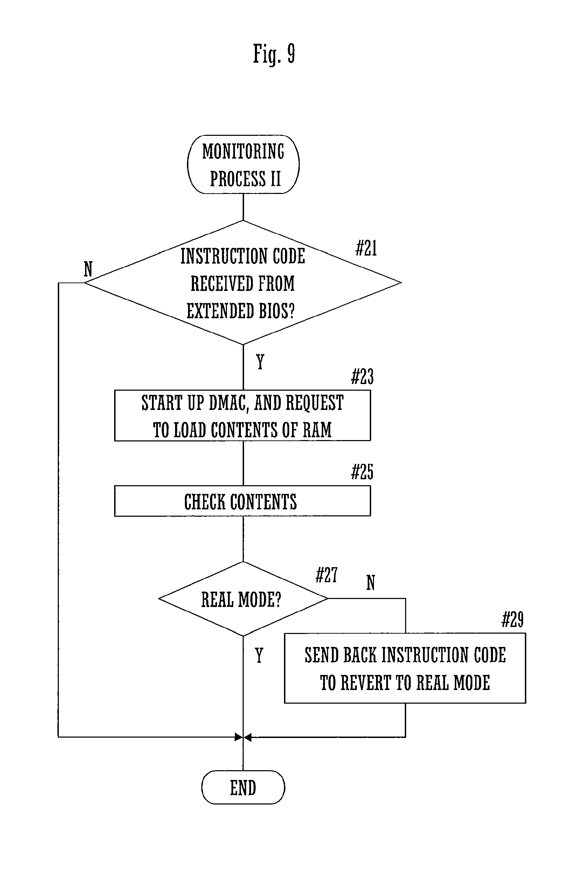

FIG. 9 is a flowchart illustrating a procedure of a monitoring process II executed by the CPU 20 in the external boot device 2. First, (after control of the CPU 10 is handed over from the system BIOS to the extended BIOS on the terminal 1), the CPU 20 determines whether the instruction code has been received from the extended BIOS (step #21). If the instruction code has not been received, the CPU 20 exits the flow of the process. If the instruction code has been received, the CPU 20 determines that the extended BIOS has control of the terminal 1, and then starts up the DMAC 24, and specifies the RAM 12 a transfer target by the DMAC 24 (step #23). In this way, the contents of the RAM 12 are retrieved to the RAM 22 in the external boot device 2 via the DMAC 24. At this point of time, all the contents of the RAM 12 (4 Gbytes herein) are retrieved without control of the CPU 10 of the terminal 1 in a manner free from the influence of the mode of the CPU 10.

Next, the CPU 20 checks whether the information unique to the protect mode, more specifically, the management table such as the IDT, GDT, TSS, or the like is present in the retrieved contents of the RAM 12 (step #25). If the information unique to the protect mode is not included in the retrieved contents of the RAM 12, the CPU 20 determines that the CPU 10 in the terminal 1 is in the real mode, and then exits the flow of the process.

On the other hand, if the information unique to the protect mode is included in the retrieved contents of the RAM 12, the CPU 20 determines that the CPU 10 in the terminal 1 may possibly be in the protect mode environment, more specifically, determines that at least malware may possibly set the CPU 10 in the terminal 1 to be in the protect mode, then sends back the instruction code to reset the CPU 10 in the terminal 1 to the real mode (step #29), and then exits the flow of the process.

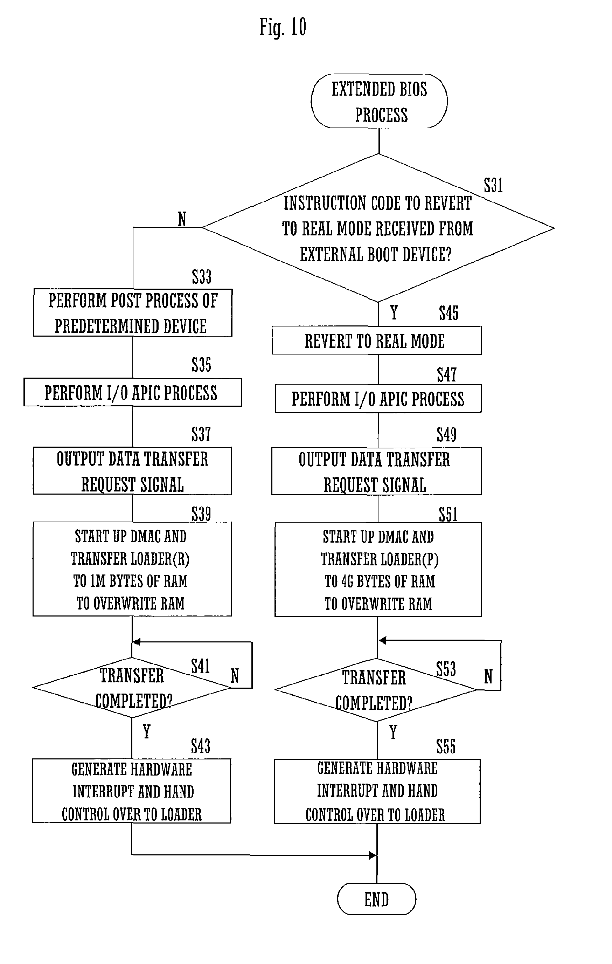

FIG. 10 is a flowchart illustrating an extended BIOS process executed by the CPU 10 in the terminal 1. The extended BIOS having received control of the CPU 10 first determines whether the instruction code to revert to the real mode has been received from the external boot device 2 (step S31). If the instruction code has not been received within a predetermined period of time prepared for reception, the CPU 10 performs the POST process for initialization on predetermined devices connected to the terminal 1 (the display 14, the keyboard, and the mouse) (step S33). Next, the CPU 10 performs an I/O APIC process (step S35), and a data transfer request signal output process (step S37). Next, the DMAC 24 starts up, the loader (R) is transferred from the loader memory 251 to the terminal 1, and the loader (R) overwrites the startup memory region 120 on the RAM 12 (step S39). If the CPU 10 verifies in response to the transfer end signal that transfer has been completed (Yes from step S41), a hardware interrupt is generated. Control of the CPU 10 is handed over to the loader (step S43), and the flow of the process ends.

If the instruction code to reset the CPU 10 in the terminal 1 to the real mode has been received on the other hand in step S31, the CPU 10 performs the real-mode return process to rewrite IDTR with an interrupt vector table for the real mode (step S45), the I/O APIC process (step S47), and the data transfer request signal output process (step S49). Next, the DMAC 24 starts up, and the loader (P) is transferred from the loader memory 252 to the terminal 1, and overwrites the entire RAM 12 (step S51). If the CPU 10 verifies in response to the transfer end signal that transfer has been completed (Yes from step S53), a hardware interrupt is generated. Control of the CPU 10 is handed over to the loader (step S55), and the flow of the process ends.

The present invention may also be implemented in the following modifications.

(1) According to the present embodiment, the external device is the PCI. The present invention is not limited to this arrangement. An external device may be acceptable as long as the external device includes a CPU, a ROM, and a RAM, and allows BIOS to be set therewithin. A device including DMAC is also acceptable. For example, the external device may be a modified version of a USB (Universal Serial Bus) memory chip or an IC card. The external device may be of a type built in a portable communication device.

(2) According to the present embodiment, data of 1 Mbytes are caused to overwrite the startup memory region 120 of the RAM 12 in the real mode. Alternatively, all data (of 4 Gbytes in the present embodiment) of the RAM 12 may be overwritten. In this way, the entire area of the RAM 12 is reliably reset regardless of mode.

(3) According to the present embodiment, data overwriting the RAM 12 are data including the loader. Alternatively, the process may be split between a process to overwrite the RAM with reset data for resetting the RAM (data of a data string of all bit values of 0's, for example) and a process to write the loader and the like thereafter.

(4) Also, according to the present embodiment, the content of the data transfer request signal transmitted from the terminal 1 to the external boot device 2 is not particularly specified. In order to increase security even more, the request signal is modified each time the terminal 1 starts up. The contents of the predetermined number of bits of the request signal are preferably varied each time in accordance with a specific rule, using information stored on the member information memory 212 of the external boot device 2, startup time, and further information prestored on the external boot device 2 as necessary. If a process to vary the contents is set on the extended BIOS, the terminal 1 can generate the request signal. When the request signal is transmitted to the external boot device 2, the external boot device 2 can check any difference between the request signals. If it is determined in step S37 that the request signals fail to match each other, the CPU 10 forces the mode to revert to the real mode (Yes from step S31).

(5) Also, according to the present embodiment, the time the external boot device 2 takes to start up is measured, and the measured time and the reference time are compared in terms of length to determine the presence or absence of a boot fault. Alternatively, the comparison with the reference time may continue during the time measurement operation of the time measurement unit 207, and at the moment the measured time exceeds the reference time, it is determined that a boot fault takes place. In this way, a faster boot fault detection results.

(6) Also, according to the present embodiment, all the contents (4 Gbytes here) of the RAM 12 are retrieved with the DMAC 24 started up in the procedure of the monitoring process II (FIG. 9). Alternatively, the contents of an area of 1 Mbytes starting at 0x0000 (the startup memory region 120 used in the real mode) may be retrieved, and then checked for the mode determination. More specifically, when the mode is shifted from the real mode to the protect mode, the management table of GDT needs to be created. The GDT is created in the real mode, and is thus created in the area of 1 Mbytes. Therefore, the mode determination may be performed by checking the presence of GDT in the area.

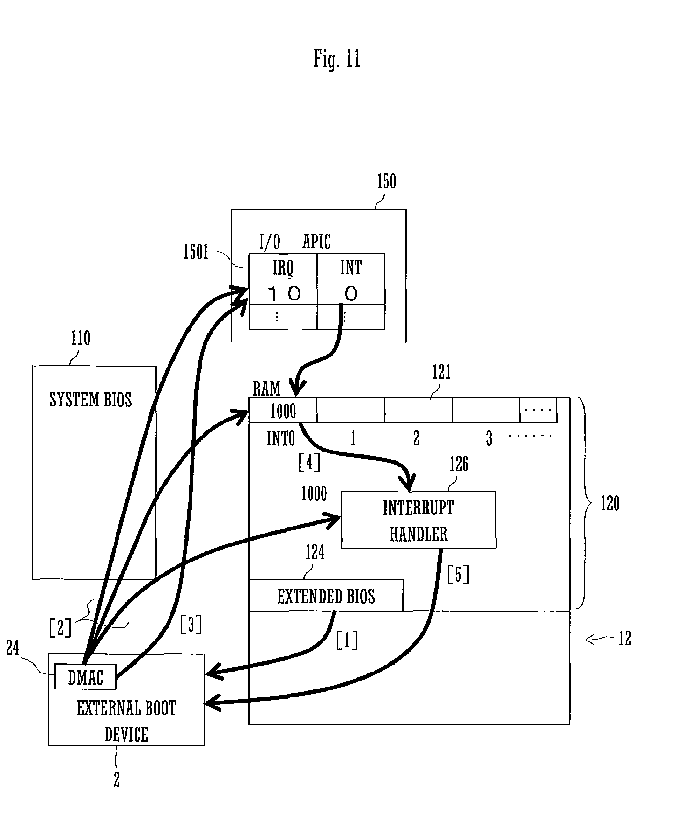

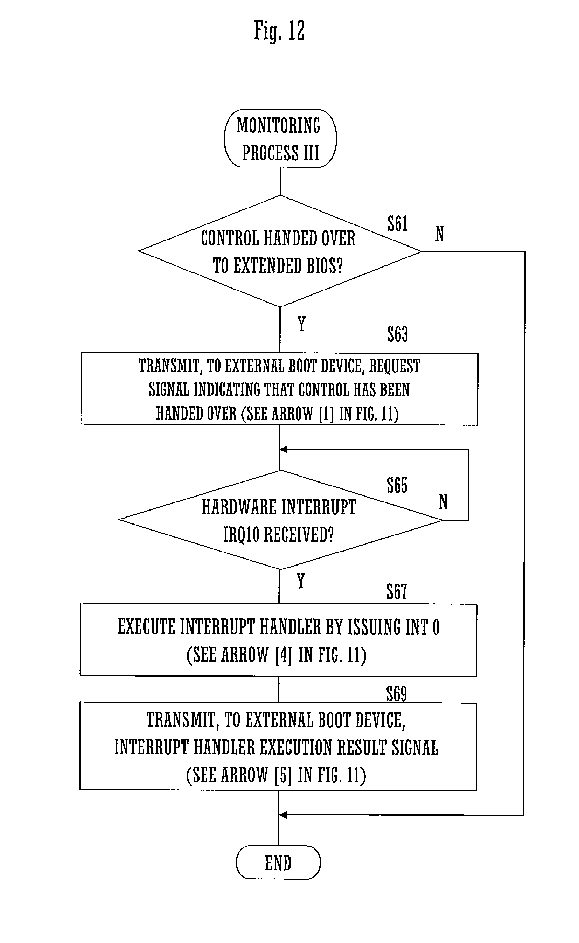

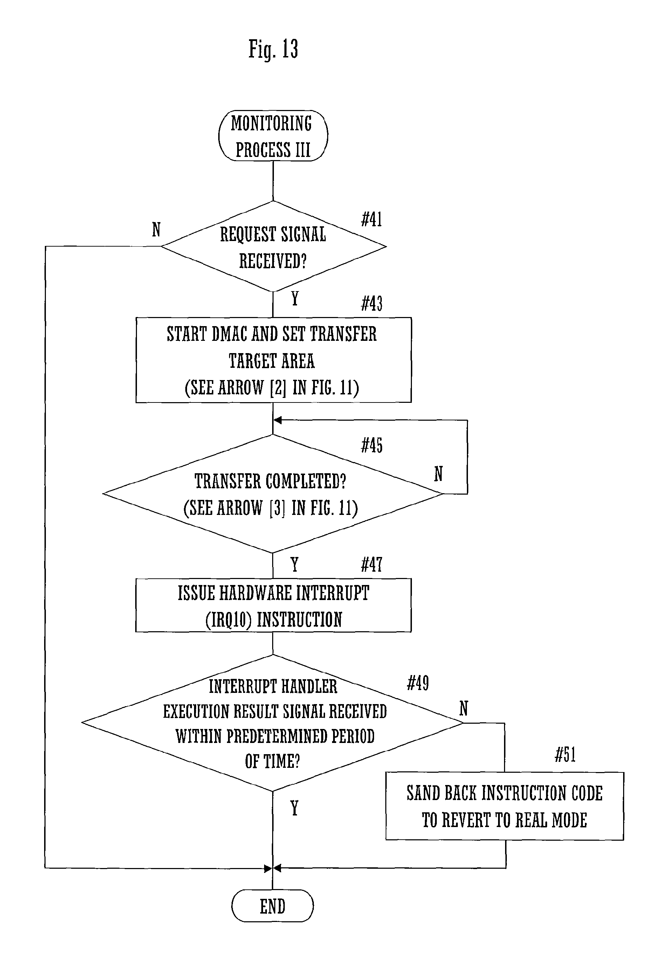

(7) According to the present invention, a monitoring process described with reference to FIGS. 11-13 may be used in place of the monitoring processes I and II. FIG. 11 illustrates the procedure of a monitoring process III executed by the CPU 20 and the extended BIOS of the external boot device 2. FIG. 12 is a flowchart illustrating part of the procedure of the monitoring process III executed by the CPU 10 in the terminal 1. FIG. 13 is a flowchart illustrating part of the procedure of the monitoring process III executed by the CPU 20 in the external boot device 2.

To perform the monitoring process III of FIG. 11, the external boot device 2 needs to be constructed as described below. The ROM 21 or the flash ROM 25 of the CPU 20 functions as storage means that stores the contents of the IO APIC, the interrupt vector table, and the interrupt handler. The DMAC 24 performs a transfer process to transfer the contents of the IOAPIC, the interrupt vector table, and the interrupt handler to the terminal 1 without control of the CPU 10. The monitoring unit 206 has a function to monitor the presence or absence of an execution result signal of an interrupt handler 126 to be discussed later. After the transfer request is issued, the DMAC 24 transfers in a bus-master scheme the interrupt vector table, and the interrupt handler corresponding to a predetermined vector in the interrupt vector table to the startup memory region, and the monitoring unit 206 has a function to determine the presence or absence of the execution result signal from the interrupt handler.

The extended BIOS performs a procedure described below. It is noted that INTO is set in hardware interrupt (IRQ10) in the redirection table 1501 of the IOAPIC 150. Here, IRQ10 is used as the hardware interrupt, but IRQ is not limited to "10." Any number may be used as long as the number is a predetermined mapping number to specify a device. The interrupt handler 126 refers to a program that waits on standby on the memory to execute an interrupt process. Set on INTO of the interrupt vector table expansion region 121 is a leading address of the program as the interrupt handler 126, i.e., address 1000 in the example of FIG. 11.

As illustrated in FIG. 12, the CPU 10 determines whether control is handed over from the system BIOS to the extended BIOS (step S61). If control is not yet handed over to the extended BIOS, the CPU 10 exits the flow of the process. On the other hand, if control is handed over to the extended BIOS, a request signal indicating that control has been handed over to the extended BIOS is transmitted (step S63, see arrow [1] in FIG. 11). The CPU 10 then determines whether a hardware interrupt (IRQ10) instruction has been issued (step S65). If the CPU 10 determines that the hardware interrupt (IRQ10) instruction has been issued within a predetermined period of time from the transmission of the request signal, INTO is specified, an INTO instruction is issued, and the interrupt handler 126 of the applicable address is executed (step S67, see arrow [4] in FIG. 11). The CPU 10 sends the execution result signal of the interrupt handler 126 back to the external boot device 2 (step S69, see arrow [5] in FIG. 11). The execution result signal of the interrupt handler 126 is preferably modified each time from the standpoint of secrecy. The execution result signal may be generated in accordance with a predetermined rule, using time and date information of booting, and member information of the member information memory 212 of the external boot device 2.

As illustrated in FIG. 13, the CPU 20 determines whether the request signal has been received (step #41). If the request signal has not been received, the CPU 20 exits the flow of the process. On the other hand, if the request signal has been received, the DMAC 24 is started up, and the CPU 20 performs a specifying process to specify a storage area as a transfer target (step #43, see arrow [2] in FIG. 11). Information as the transfer target is thus transferred to the terminal 1 in a block transfer without control of the CPU 10. The information of the transfer target refers to the contents of (the redirection table 1501 of) the IOAPIC 150, the interrupt vector table 121, and the interrupt handler 126.

It is then determined whether the transfer end signal output from the CPU 20 in response to the end of the transfer operation is present (step #45). Upon verifying the presence of the transfer end signal, the CPU 20 issues and transmits the hardware interrupt (IRQ10) instruction to the terminal 1 (step #47, see arrow [3] in FIG. 11). The CPU 20 then determines in the monitoring process whether the interrupt handler execution result signal has been received within a predetermined period of time from the issuance of the hardware interrupt (IRQ10) instruction (step #49). If the monitoring results indicate that the interrupt handler execution result signal has been received, the CPU 20 determines that the CPU 10 is in the real mode and that booting has been normally completed. The CPU 20 then exits the flow of the process.

If malware sets the CPU 10 to be in the protect mode, the CPU 10 is unable to know the address of INTO of the interrupt vector table 121 and a leading address of the interrupt handler 126 before a bus-master transfer of the DMAC 24. The address of INTO set by the malware may not be mapped to the leading address of the interrupt handler 126. The contents of INTO and the leading address of the interrupt handler 126 are preferably set by the external boot device 2 on a per boot operation basis in accordance with a predetermined rule or set randomly by activating a random-number generator.

If the CPU 10 is in the protect mode, the CPU 20 determines that it is likely that the interrupt handler is not executed, and that the interrupt handler execution result signal is not generated as a result of monitoring. In other words, the CPU 20 determines that it is likely that booting is not normally performed. The CPU 20 sends the instruction code to reset the CPU 10 in the terminal 1 to the real mode (step #51), and then exits the flow of the process. After exiting the process of FIG. 13, the terminal 1 performs the process of FIG. 10.

If the DMAC is arranged on the terminal 1, there is a possibility that the startup of DMAC and the specifying of the transfer target are managed by the CPU 10 occupied by malware (for example, even if a given process is not performed, only a signal indicating that the process has been performed is falsely generated and output). The arrangement of DMAC 24, if arranged outside the external boot device 2, can preclude control of the CPU 10.

As described above, the external boot device of the present invention to boot up an information processing apparatus, preferably includes storage means that stores a loader and an extended BIOS to read the loader, extended BIOS reading means that reads the extended BIOS onto the information processing apparatus in response to a read request from BIOS of the information processing apparatus, and transfer means that in a bus master scheme transfers the loader to a startup memory region on a RAM of the information processing apparatus in response to a transfer request from the extended BIOS read onto the information processing apparatus. Even if malware hides in the BIOS of the information processing apparatus, the arrangement described above sets a high-security environment that prevents the malware from appearing in the use environment of the information processing apparatus.

The transfer means preferably includes a transfer unit that in the bus master scheme transfers the loader, and transfer request means that requests the transfer unit to transfer the loader. Since the transfer unit such as DMAC performs the transfer operation of the loader in response to the transfer request from the transfer request means, the transfer operation is not under the control of the CPU. Even if the CPU is infected with malware, the transfer of the loader is normally performed.

The external boot device preferably includes monitoring means that monitors the presence or absence of a boot fault. This arrangement allows to be detected a boot fault that the BIOS of the information processing apparatus is infected with malware.

The monitoring means preferably includes time measurement means that measures a period of time from when power is on to when the transfer request is issued, and time determination means that determines whether measured time exceeds set time. If BIOS is infected with malware, and the CPU is set to the protect mode environment, the boot time becomes longer than the standard boot time. With this arrangement, the boot time is measured, and the measured time determines whether the CPU is set by malware to be in the protect mode.

The monitoring means preferably includes retrieval means that retrieves contents of the RAM after the transfer request is issued, and content determination means that checks in accordance with the retrieved contents whether the RAM is internally in a protect mode environment. This arrangement checks whether the contents of the RAM are in the protect mode with control of the information processing apparatus handed over to the extended BIOS.

The monitoring means preferably includes an interrupt transfer unit that in the bus master scheme transfers to the startup memory region an interrupt vector table and an interrupt handler corresponding to a predetermined vector of the interrupt vector table after the transfer request is issued, and an interrupt handler execution result signal determination means that determines the presence or absence of an execution result signal from the interrupt handler. If malware sets the CPU to be in the protect mode, the CPU is unable to know the mapping between the address of a predetermined vector of the interrupt vector table and the leading address of the interrupt handler prior to the bus master transfer based on the interrupt transfer unit, and is thus unable to map the address of the predetermined vector set by the malware to the leading address of the interrupt handler. The interrupt hander is not executed in the protect mode, and no interrupt handler execution result signal is generated as the result of monitoring. Whether the CPU is set in the protect mode by malware is thus determined.

The external boot device preferably includes update means that rewrites the RAM of the information processing apparatus with contents in a real mode if the monitoring means determines that the booting is faulty. With this arrangement, even if the information processing apparatus is set in the protect mode by malware, the information processing apparatus is reliably set back into the real mode. The arrangement thus sets a high-security environment preventing the malware from appearing in the use environment of the information processing apparatus.

The update means preferably rewrites the RAM of the information processing apparatus with the contents in the real mode, if the time determination means determines that the measured time exceeds the set time. If the protect mode is assumed in this arrangement, the RAM of the information processing apparatus is fully rewritten with the contents in the real mode. The operation of the CPU is thus set back to the real mode environment.

The update means preferably rewrites the RAM of the information processing apparatus with the contents in the real mode, if the content determination means determines that the RAM is internally in the protect mode environment. If the protect mode is assumed in this arrangement, the RAM of the information processing apparatus is fully rewritten with the contents in the real mode. The operation of the CPU is thus set back to the real mode environment.

The update means preferably writes a predetermined content onto the RAM. If the predetermined content, for example, all 0's values, overwrites the RAM set in the protect mode, the contents set by the malware in the protect mode are deleted.

Te predetermined content preferably includes the loader. The predetermined content may include data to be loaded next, such as loader and interrupt vector table information so that updating is entirely performed for a short time.

The storage means preferably stores a predetermined OS file to be loaded by the loader. This arrangement allows the information processing apparatus to be operated using the unique OS and further the particular AP (application software) while the external boot device storing the OS program unique thereto is mounted on the information processing apparatus.

The external boot device is preferably a PCI. CPU, ROM, RAM, and BIOS included in the PCI and DMAC are thus effectively used.

Preferably, an information processing apparatus includes a connection port that is communicable with the external boot device and is externally booted by the external boot device. With this arrangement, the OS in the external boot device is used while the information processing apparatus is connected to the external boot device via the connection port.

A network communication system preferably includes the external boot device, and an information processing apparatus that has a connection port communicable with the external boot device, and is externally booted by the external boot device. With this arrangement, the OS in the external boot device is used to communicate specific information via the network while the information processing apparatus is connected to the external boot device via the connection port.

The external boot device preferably includes a communication unit that is communicable with a network. Since communication via the network is performed via the communication unit of the external boot device, the network isolated in the software point of view from the ordinary network may be used.

### Reference Signs List

- 1: Terminal (information processing apparatus)
- 1a: Port (connection port)
- 10 and 20: CPUs
- 11 and 21: ROMs
- 12 and 22: RAMs
- 13: Operation unit
- 14: Display
- 101: BIOS processor
- 102: Extended BIOS load processor
- 103: Extended BIOS execution processor (part of update means, and part of retrieval means)
- 104: Loader execution processor
- 105: Network communication controller
- 120: Startup memory region
- 15: Chipset
- 2: External boot device
- 201: Extended BIOS reading processor (extended BIOS reading means)
- 202: DMA transfer commander (part of transfer means, and transfer request means)
- 203: DMA reset transfer commander (part of the transfer means, and the transfer request means)
- 206: Monitoring unit (monitoring means)
- 207: Time measurement unit (time measurement means)
- 208: Determining unit (time determination means)
- 209: Mode checking unit (content determination means)
- 211: Processing program memory
- 212: Member information memory
- 213: Reference time memory
- 23: Extended BIOS memory (storage means)
- 24: DMAC (part of the transfer means, transfer unit, part of the update means, part of the retrieval means, and interrupt transfer unit)
- 25: Flash ROM
- 251: Loader (R) memory (storage means)
- 252: Loader (P) memory (storage means)
- 253: Memory for OS and other file
- 26: NIC (communication unit)
- 3: Network

## Claims

1. An external boot device to boot up an information processing apparatus, comprising:
storage means that stores a loader and an extended BIOS to read the loader;
extended BIOS reading means that reads the extended BIOS onto the information processing apparatus in response to a read request from BIOS of the information processing apparatus; and
transfer means that in a bus master scheme transfers the loader to a startup memory region on a RAM of the information processing apparatus in response to a transfer request from the extended BIOS read onto the information processing apparatus.

2. The external boot device according to Claim 1, wherein the transfer means comprises a transfer unit that in the bus master scheme transfers the loader, and transfer request means that requests the transfer unit to transfer the loader.

3. The external boot device according to one of Claims 1 and 2, comprising monitoring means that monitors the presence or absence of a boot fault.

4. The external boot device according to Claim 3, wherein the monitoring means comprises time measurement means that measures a period of time from when power is on to when the transfer request is issued, and time determination means that determines whether the measured time exceeds set time.

5. The external boot device according to Claim 3, wherein the monitoring means comprises retrieval means that retrieves contents of the RAM after the transfer request is issued, and content determination means that checks in accordance with the retrieved contents whether the RAM is internally in a protect mode environment.

6. The external boot device according to Claim 3, wherein the monitoring means comprises an interrupt transfer unit that in the bus master scheme transfers to the startup memory region an interrupt vector table and an interrupt handler corresponding to a predetermined vector of the interrupt vector table after the transfer request is issued, and an interrupt handler execution result signal determination means that determines the presence or absence of an execution result signal from the interrupt handler.

7. The external boot device according to one of Claims 4 through 6, comprising update means that rewrites the RAM of the information processing apparatus with contents in a real mode if the monitoring means determines that the booting is faulty.

8. The external boot device according to Claim 7, wherein the update means rewrites the RAM of the information processing apparatus with the contents in the real mode, if the time determination means determines that the measured time exceeds the set time.

9. The external boot device according to Claim 7, wherein the update means rewrites the RAM of the information processing apparatus with the contents in the real mode, if the content determination means determines that the RAM is internally in the protect mode environment.

10. The external boot device according to one of Claims 7 through 9, wherein the update means writes a predetermined content onto the RAM.

11. The external boot device according to Claim 10, wherein the predetermined content comprises the loader.

12. The external boot device according to one of Claims 1 through 11, wherein the storage means stores a predetermined OS file to be loaded by the loader.

13. The external boot device according to one of Claims 1 through 12, wherein the external boot device is a PCI.

14. An information processing apparatus comprising a connection port that is communicable with the external boot device according to one of Claims 1 through 13, wherein the information processing apparatus is externally booted by the external boot device.

15. A network communication system comprising the external boot device according to one of Claims 1 through 13, and an information processing apparatus that has a connection port communicable with the external boot device, and is externally booted by the external boot device.

16. The network communication system according to Claim 15, wherein the external boot device comprises a communication unit that is communicable with a network.

17. An external boot method to boot up an information processing apparatus, comprising:
storing on storage means a loader and an extended BIOS to read the loader;
reading with extended BIOS reading means the extended BIOS onto the information processing apparatus in response to a read request from BIOS of the information processing apparatus; and
transferring with transfer means in a bus master scheme the loader to a startup memory region on a RAM of the information processing apparatus in response to a transfer request from the extended BIOS read onto the information processing apparatus.

18. The external boot method according to Claim 17, wherein the transfer means comprises a transfer unit that in the bus master scheme transfers the loader, and transfer request means that requests the transfer unit to transfer the loader.
